# EUROPÄISCHE PATENTSCHRIFT

(11) **EP 0 927 112 B1**
(45) Veröffentlichungstag und Bekanntmachung des Hinweises auf die Patenterteilung: **24.05.2000**
(21) Anmeldenummer: 97940117.1
(22) Anmeldetag: 22.08.1997
(51) Int. Cl.: B60Q 1/30

(54) **KLAPPENANORDNUNG AN EINER KRAFTFAHRZEUGKAROSSERIE**
FLAP ARRANGEMENT FOR A CAR BODY
CONFIGURATION DE TRAPPE OU DE HAYON SUR UNE CARROSSERIE DE VEHICULE AUTOMOBILE

(30) Priorität: 21.09.1996 DE 19638719
(43) Veröffentlichungstag der Anmeldung: 07.07.1999
(73) Patentinhaber: Volkswagen Aktiengesellschaft, 38436 Wolfsburg (DE)
(72) Erfinder: REZZONICO, Luca, D-38173 Sickte (DE)
(86) Internationale Anmeldenummer: EP9704591
(87) Internationale Veröffentlichungsnummer: WO9812070

(56) Entgegenhaltungen:
- DE-A- 3 940 016

## Beschreibung

Die Erfindung betrifft eine Klappenanordnung an einer Kraftfahrzeugkarosserie, insbesondere die Anordnung der Klappe für den Tankdeckel oder die Anordnung der Heckklappe.

Es ist bekannt, an einer Kraftfahrzeugkarosserie angeordnete, manuell betätigbare Klappen mit einer Betätigungshilfe zu versehen. Tankdeckel können als Betätigungshilfe auf der ihrem Anschlag gegenüberliegenden Seite eine Ausbauchung aufweisen, in die ein Finger der Bedienperson eingreifen und den Tankdeckel öffnen kann. Bekannt ist es auch, in dem dem Tankdeckel benachbarten Karosseriebereich eine Griffmulde zum Hintergreifen des Tankdeckels anzuordnen. Auch die Kombination einer am Tankdeckel angeordneten Ausbauchung mit einer in das benachbarte Karosserieteil eingebrachten Griffmulde ist bekannt. Es ist ebenfalls bekannt, den Tankdeckel mit einer Ausnehmung zum Durchstecken und Hintergreifen durch einem Finger einer Bedienperson zu versehen.

Aus der DE 39 40 016 A1 ist ein an einer Kraftfahrzeugkarosserie angeordneter Gepäckraumdeckel (Heckklappe) bekannt, der mit mindestens einer von einer Lichtscheibe überdeckten Leuchte versehen ist und bei der die Lichtscheibe mindestens ein von ihrer Oberfläche zurückgesetztes oder über diese hinausragendes Griffelement zum Verschwenken der Klappe aufweist, so daß entweder eine Griffmulde oder eine Griffleiste an der Lichtscheibe gegeben ist. Das Griffelement ist dabei unmittelbar an der an der Klappe angeordneten Lichtscheibe ausgebildet, so daß durch die Einstückigkeit der Ausbildung kein höherer Kostenaufwand gegeben ist. Das Griffelement kann längs des unteren Randes der Lichtscheibe angeordnet sein. Die Klappe kann zum Öffnen oder Schließen der Klappe durch eine entsprechende Kraftbeaufschlagung des Griffelementes und mit diesem auf- und niedergeschwenkt werden.

Die Heckleuchte wird bei dieser Ausführungsform mit dem Gepäckraumdeckel mitbewegt und ist integraler Bestandteil desselben. Eine solche Lösung ist insbesondere daher von Nachteil, da elektrische Leitungen zu dem bewegten Teil hingeführt werden müssen. Weiterhin ist eine solche Lösung nur für eine Klappe anwendbar, die eine entsprechende Größe zur Aufnahme der Leuchte aufweist.

Das Verschwenken des Gepäckraumdeckels erfolgt hier durch Eingreifen in die Griffleisten und Ausübung einer Kraft auf die Lichtscheibe. Die Griffleiste muß daher haptischen Ansprüchen genügen und eine entsprechende Kraftangriffsfläche zum Verschenken der Klappe aufweisen. Insbesondere für kleinere Klappen ist eine solche Lösung nicht anwendbar.

Insbesondere bei Kleinfahrzeugen kann die Anordnung von Betätigungshilfen für manuell betätigbare Klappen an einer Kraftfahrzeugkarosserie wegen fehlenden Raumes im benachbarten Karosseriebereich Schwierigkeiten bereiten.

Es ist deshalb Aufgabe der Erfindung, eine Klappenanordnung an einer Kraftfahrzeugkarosserie nach dem Oberbegriff des Anspruchs 1 auch für eine Kraftfahrzeugkarosserie sicherzustellen, bei der der Raum zur Anordnung einer manuell betätigbaren Klappe eng begrenzt ist.

Diese Aufgabe wird bei einer gattungsgemäßen Klappenanordnung durch die kennzeichnenden Merkmale des Anspruchs 1 gelöst. Dadurch, daß die als Betätigungselement angeordnete Griffmulde in die Lichtscheibe der Heckleuchte eingebracht ist, kann eine Klappenanordnung mit einer Griffmulde trotz fehlender Karosseriefläche neben der Klappe sichergestellt werden. Dabei kann die Ausbildung der Heckleuchte mit den Wünschen und Forderungen an die Karosseriegestaltung in Übereinstimmung gebracht werden.

Die erfindungsgemäße Lösung ermöglicht es auch, kleinere Klappen mittels der Griffmulde zu öffnen, da die Griffmulde nicht in der Klappe selbst angeordnet ist, und damit die Größe der Klappe für die Griffmulde unerheblich ist. Ferner sind besondere haptische Ausbildung der Griffmulde nicht erforderlich, da die Klappe durch Ergreifen der Klappe selbst verschwenkt wird. Die Anordnung der Griffmulde in der Lichtscheibe ist weiterhin von Vorteil, da sie beim Spritzvorgang der Lichtscheibe kostengünstig mit angespritzt werden kann.

Die Griffmulde kann dabei als eine in Richtung der Klappe zunehmende Vertiefung für wenigstens einen Finger einer Bedienperson ausgebildet sein.

Die Klappe kann zusätzlich im Bereich der benachbarten Griffmulde eine nach außen gerichtete Ausbauchung aufweisen, so daß sowohl die Griffmulde in ihrer Tiefe als auch die Ausbauchung in ihrer Höhe geringer dimensioniert werden können.

Die Griffmulde kann alternativ zu ihrer Ausbildung als zunehmende Vertiefung als senkrecht zur Heckleuchtenoberfläche angeordnete Ausnehmung ausgebildet sein.

Die Erfindung wird nachstehend an Ausführungsbeispielen erläutert. In den zugehörigen Zeichnungen zeigen schematisch:
- Fig. 1:: eine erfindungsgemäße Klappenanordnung mit einem Tankdeckel,
- Fig. 2a:: eine Sicht auf die Heckleuchte vom Tankdeckel aus,
- Fig. 2b:: einen Schnitt II-II durch die Heckleuchte und
- Fig. 3:: eine erfindungsgemäße Klappenanordnung mit einer Heckklappe.

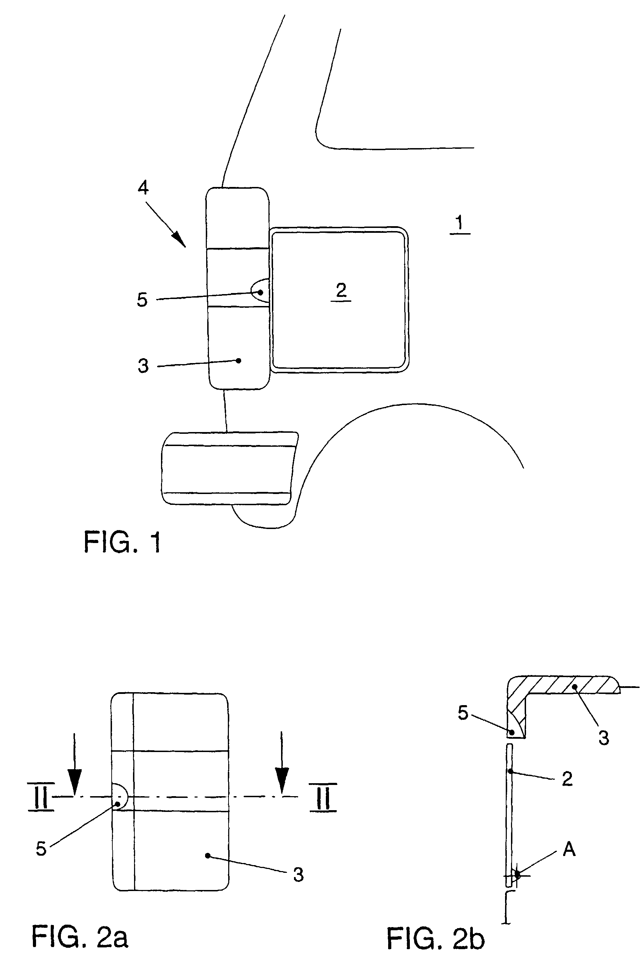

In Fig. 1 ist eine Klappenanordnung an einer Kraftfahrzeugkarosserie 1 mit einem Tankdeckel 2 am Heck des Kraftfahrzeuges gezeigt. Der Tankdeckel 2 grenzt an die Lichtscheibe 3 einer Heckleuchte 4. In die Lichtscheibe 3 ist eine Griffmulde 5 eingebracht, die eine in Richtung auf den Tankdeckel 2 zunehmende Vertiefung darstellt, in der ein Finger einer Bedienperson bequem einführbar und der Tankdeckel 2 hintergreifbar ist. Die Fig. 2a und 2b verdeutlichen die Ausbildung der Griffmulde 5. Insbesondere zeigt Fig. 2b, daß der Tankdeckel 2 an der Griffmulde 5 hintergreifbar und um die Schwenkachse A in Pfeilrichtung verschenkbar angeordnet ist.

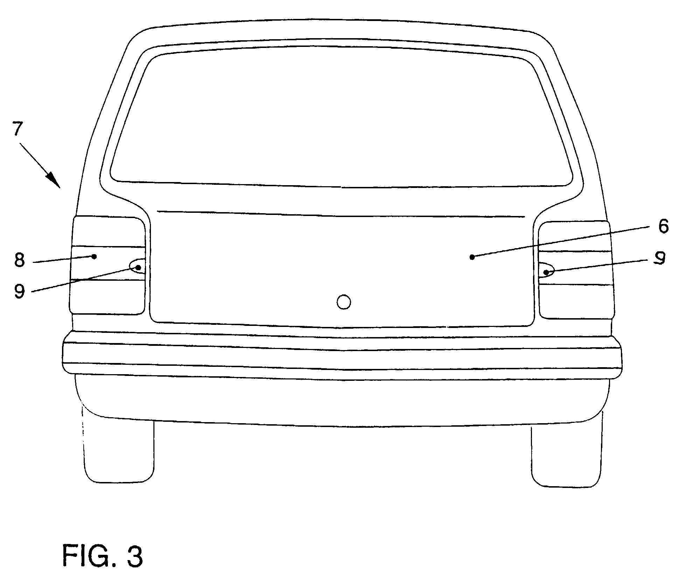

In Fig. 3 ist die Heckpartie eines Kraftfahrzeuges mit einer Heckklappe 6 gezeigt. Diese grenzt an beiden Seiten an eine Heckleuchte 7, in deren Lichtscheibe 8 eine Griffmulde 9 eingebracht ist. An den beiden Griffmulden 9 kann die Heckklappe 6 hintergriffen und hochgeklappt werden.

Die Ausbildung der Griffmulde 5 oder 9 in der Lichtscheibe 3 oder 8 erfolgt auf einfache Weise beim Spritzgießen der jeweiligen Lichtscheibe.

Der Tankdeckel 2 und die Heckklappe 6 lassen sich durch die Anordnung der Griffmulden 5 und 9 in der benachbarten Lichtscheibe 3 bzw. 8 der jeweiligen Heckleuchte 4 und 7 wesentlich erleichtert öffnen.

## Patentansprüche

1. Klappenanordnung an einer Kraftfahrzeugkarosserie (1) mit einer manuell betätigbaren Klappe (2; 6) und einer im angrenzenden Fahrzeugbereich an einem feststehenden Teil der Fahrzeugkarosserie (1) angeordneten Heckleuchte (4; 7) und einer Griffmulde (5; 9) zum Hintergreifen der Klappe (2; 6), **dadurch gekennzeichnet, daß** die Griffmulde (5; 9) in die Lichtscheibe (3; 8) der Heckleuchte (4; 7) eingebracht ist.

2. Klappenanordnung nach Anspruch 1, **dadurch gekennzeichnet, daß** die Griffmulde (5; 9) eine in Richtung der Klappe (2; 6) zunehmende Vertiefung für wenigstens einen Finger einer Bedienperson ist.

3. Klappenanordnung nach Anspruch 1 oder 2, **dadurch gekennzeichnet, daß** die Klappe (2; 6) im Bereich der benachbarten Griffmulde (5; 9) eine nach außen gerichtete Ausbauchung aufweist.

4. Klappenanordnung nach Anspruch 1, **dadurch gekennzeichnet, daß** die Griffmulde (5; 9) durch eine Ausnehmung in der Lichtscheibe (3; 8) der Heckleuchte (4; 7) gebildet ist.

5. Heckleuchte (4; 7) für ein Kraftfahrzeug, wobei die Heckleuchte (4; 7) an einem feststehenden Teil der Fahrzeugkarosserie (1) angrenzend zu einer manuell betätigbaren Klappe (2; 6) angeordnet ist, **dadurch gekennzeichnet, daß** die Heckleuchte (4; 7) eine Griffmulde (5; 9) aufweist.

## Claims

1. Flap arrangement for a motor vehicle body (1) having a manually actuated flap (2; 6) and a tail light (4; 7) disposed in the adjoining vehicle region on a stationary part of the vehicle body (1), and having a gripping recess (5; 9) to grip behind the flap (2; 6), characterised in that the gripping recess (5; 9) is incorporated into the light glass (3; 8) of the tail light (4; 7).

2. Flap arrangement according to claim 1, characterised in that the gripping recess (5; 9) is a depression, increasing in the direction towards the flap (2; 6), for at least one finger of an operator.

3. Flap arrangement according to claim 1 or 2, characterised in that the flap (2; 6) comprises an outwardly directed convexity in the region of the adjoining gripping recess (5; 9).

4. Flap arrangement according to claim 1, characterised in that the gripping recess (5; 9) is formed by a cut-out in the light glass (3; 8) of the tail light (4; 7).

5. Tail light (4; 7) for a motor vehicle, wherein the tail light (4; 7) is disposed on a stationary part of the vehicle body (1) adjoining a manually actuated flap (2; 6), characterised in that the tail light (4; 7) comprises a gripping recess (5; 9).

## Revendications

1. Configuration de trappe sur une carrosserie (1) de véhicule automobile, comportant une trappe (2 ; 6) pouvant être actionnée manuellement, un feu arrière (4 ; 7) disposé dans la zone contiguë du véhicule sur une partie fixe de la carrosserie (1) de véhicule automobile, et une cavité de préhension (5 ; 9) destinée à saisir la trappe (2 ; 6) par l'arrière, caractérisée en ce que la cavité de préhension (5 ; 9) est intégrée dans le cache translucide (3 ; 8) du feu arrière (4 ; 7).

2. Configuration de trappe selon la revendication 1, caractérisée en ce que la cavité de préhension (5 ; 9) est un renfoncement dont la profondeur augmente en direction de la trappe (2 ; 6) destinée à au moins un doigt d'une personne la manoeuvrant.

3. Configuration de trappe selon la revendication 1 ou 2, caractérisée en ce que dans la zone de la cavité de préhension (5 ; 9) voisine, la trappe (2 ; 6) comporte une convexité orientée vers l'extérieur.

4. Configuration de trappe selon la revendication 1, caractérisée en ce que la cavité de préhension (5 ; 9) est formée par un évidement pratiqué dans le cache translucide (3 ; 8) du feu arrière (4 ; 7).

5. Feu arrière (4 ; 7) destiné à un véhicule automobile, le feu arrière (4 ; 7) étant disposé sur une partie fixe de la carrosserie (1) de véhicule automobile contiguë à une trappe (2 ; 6) pouvant être actionnée manuellement, caractérisé en ce que le feu arrière (4 ; 7) comporte une cavité de préhension (5 ; 9).
